# EUROPÄISCHE PATENTSCHRIFT

(11) **EP 2 000 487 B1**
(45) Veröffentlichungstag und Bekanntmachung des Hinweises auf die Patenterteilung: **16.06.2010**
(21) Anmeldenummer: 08156969.1
(22) Anmeldetag: 27.05.2008
(51) Int. Cl.: C08G 18/42, C08G 18/36

(54) **Verfahren zur Herstellung von Polyurethan-Hartschaumstoffen**
Method for manufacturing polyurethane solid foam substances
Procédé destiné à la fabrication de mousses rigides de polyuréthane

(30) Priorität: 01.06.2007 EP 07109441
(43) Veröffentlichungstag der Anmeldung: 10.12.2008
(73) Patentinhaber: BASF SE, 67056 Ludwigshafen (DE)
(72) Erfinder: Kampf, Gunnar, 32351, Stemwede-Haldem (DE); Tomovic, Zeljko, 49448, Lemförde (DE); Tischer, Gerlinde, 01945, Ruhland (DE); Wang, Yayun, 49448, Lemförde (DE)

(56) Entgegenhaltungen:
- EP-A- 1 632 511
- WO-A-2006/108833
- GB-A- 825 869
- DATABASE WPI Week 200472 Thomson Scientific, London, GB; AN 2004-732103 XP002491058 & JP 2004 285173 A (TOHO RIKA KK) 14. Oktober 2004 (2004-10-14)

## Beschreibung

Polyurethan-Hartschaumstoffe sind seit langem bekannt und vielfach beschrieben. Der Einsatz der Polyurethan- Hartschaumstoffe erfolgt vorwiegend zur Wärmeisolation, beispielsweise in Kältegeräten, Transportmitteln oder Gebäuden sowie zur Herstellung von Bauelementen, insbesondere Sandwich-Elementen.

Ihre Herstellung erfolgt üblicherweise durch Umsetzung von Polyisocyanaten, wobei hier zumeist Diphenylmethandiisocyanat (MDI) und insbesondere Mischungen aus Diphenylmethandiisocyanat und den höheren Homologen Polyphenylenpolymethylenpolyisocyanaten (Roh-MDI) eingesetzt werden, mit Verbindungen mit mindestens zwei mit Isocyanatgruppen reaktiven Wasserstoffatomen.

Ein wesentliches Einsatzgebiet der Polyurethan-Hartschaumstoffe sind Verbundelemente. Die Herstellung von Verbundelementen aus insbesondere metallischen Deckschichten und einem Kern aus Schaumstoffen auf Isocyanatbasis, zumeist Polyurethan- (PUR) oder Polyisocyanurat-(PIR) Schaumstoffen, häufig auch als Sandwichelemente bezeichnet, auf kontinuierlich arbeitenden Doppelbandanlagen wird gegenwärtig in großem Umfang praktiziert. Neben Sandwichelementen zur Kühlhausisolierung gewinnen Elemente mit farbigen Deckschichten zur Gestaltung von Fassaden verschiedenster Gebäude immer mehr an Bedeutung. Als Deckschichten werden dabei neben beschichteten Stahlblechen auch Edelstahl-, Kupfer- oder Aluminiumbleche eingesetzt.

Als Verbindungen mit mindestens zwei mit Isocyanatgruppen reaktiven Wasserstoffatomen werden bei der Herstellung der Polyurethane vorzugsweise Polyetheralkohole und/oder Polyesteralkohole eingesetzt. Die Auswahl der Polyole erfolgt insbesondere unter Berücksichtigung der Kosten- und der gewünschten Anwendungseigenschaften.

Polyesteralkohole werden vorzugsweise für die Herstellung von Schaumstoffen eingesetzt, die neben Urethan- auch Isocyanuratgruppen in der Matrix enthalten. Durch den Einsatz von aromatischen Polyesteralkoholen können die Flammfestigkeit und die Wärmeisolationseigenschaften der Schaumstoffe verbessert werden. Durch aliphatische Polyesteralkohole kann die Sprödigkeit der Schaumstoffe verringert werden. Darüber hinaus sind Polyesteralkohole preiswerter als Polyetheralkohole.

US 4,576,974 beschreibt ein Verfahren zur Herstellung von flammgeschützten Polyurethan-Hartschaumstoffen unter Verwendung von aliphatischen Polyesteralkoholen.

EP-A 1219653 beschreibt Polyurethan-Hartschaumstoffe mit verbesserter Flammfestigkeit und Wärmeisolation unter Verwendung von aromatischen Polyesteralkoholen.

Nachteilig bei der Verwendung von Polyesteralkoholen sind unter anderem die hohe Viskosität, die geringe Löslichkeit für das als Treibmittels vorzugsweise eingesetzte Pentan und die schlechte Verträglichkeit mit anderen Alkoholkomponenten, insbesondere Polyetheralkoholen.

Um diesen Mangel zu beheben, wurde in DE 10 2004 011 346 vorgeschlagen, die Polyesteralkohole in Form von Urethangruppen und Isocyanatgruppen enthaltenden Prepolymeren einzusetzen. Doch auch dadurch konnten die Probleme mit der hohen Viskosität nicht gelöst werden.

Eine ständige Aufgabe bei der Herstellung von Polyurethan-Hartschaumstoffen ist die Verbesserung der Oberflächeneigenschaften der Polyurethan-Hartschaumstoffe. Dies ist insbesondere bei der Herstellung von Verbundelementen erforderlich, da hiervon auch die Haftung der Deckschichten am Schaum wesentlich beeinflusst wird. Auch bei der Herstellung von Schaumstoffen nach dem Sprühschaumverfahren ist eine gute Oberfläche von großer Bedeutung.

Es war daher die Aufgabe der Erfindung, ein Verfahren zur Herstellung von Polyurethan-Hartschaumstoffen zu entwickeln, das zu Schäumen mit einer guten Oberfläche mit wenig Lunkern und guten mechanischen Eigenschaften führt, dessen Polyolkomponente eine geringe Viskosität und einer gute Löslichkeit von Kohlenwasserstoffen aufweist und das gute Verarbeitungseigenschaften, insbesondere eine gute Fließfähigkeit und Aushärtung, besitzt. Die Hartschaumstoffe sollten insbesondere auch nach dem Sprühverfahren herstellbar sein.

Die Aufgabe konnte überraschenderweise dadurch gelöst werden, dass die Verbindungen mit mindestens zwei mit Isocyanatgruppen reaktiven Wasserstoffatomen mindestens einen Polyesteralkohol mit einer Funktionalität von 1,5 bis 6 und einer Hydroxylzahl im Bereich zwischen 200 und 800 mgKOH/g enthalten, zu dessen Herstellung mindestens eine aliphatische, mindestens zweifunktionelle Carbonsäure, mindestens ein aliphatischer, mindestens zweifunktioneller Alkohol sowie mindestens ein Pflanzenöl, und/oder mindestens eine Fettsäure eingesetzt wurde.

Gegenstand der Erfindung ist demzufolge ein Verfahren zur Herstellung von Polyurethan-Hartschaumstoffen durch Umsetzung von
a) Polyisocyanaten mit
b) Verbindungen mit mindestens zwei mit Isocyanatgruppen reaktiven Wasserstoffatomen in Anwesenheit von
c) Treibmitteln,
dadurch gekennzeichnet, dass die Komponente b) mindestens einen Polyesteralkohol bi) mit einer Funktionalität von 1,5 bis 4,5 und einer Hydroxylzahl im Bereich zwischen 200 und 800 mgKOH/g enthält, zu dessen Herstellung mindestens eine aliphatische, mindestens zweifunktionelle Carbonsäure, mindestens ein aliphatischer, mindestens zweifunktioneller Alkohol sowie mindestens ein Pflanzenöl, und/oder mindestens eine Fettsäure eingesetzt wurde.

Gegenstand der Erfindung sind weiterhin Polyurethan-Hartschaumstoffe, hergestellt nach dem erfindungsgemäßen Verfahren.

Gegenstand der Erfindung sind weiterhin Polyesteralkohole mit einer Funktionalität von 1,5 bis 4,5 und einer Hydroxylzahl im Bereich zwischen 200 und 800 mgKOH/g, hergestellt durch Umsetzung von 10 bis 50 Mol-% einer aliphatischen, mindestens zweifunktionellen Carbonsäure, 3 bis 20 Mol-% einer Fettsäure oder 1 bis 8 Mol-% eines Pflanzenöls und 40 bis 80 Mol-% eines aliphatischen, mindestens zweifunktionellen Alkohols zur Umsetzung gebracht werden, wobei sich die Mol-% auf 100 Mol-% ergänzen.

Die zur Herstellung der Polyesteralkohole bi) eingesetzten Pflanzenöle sind vorzugsweise ausgewählt aus der Gruppe, enthaltend Rizinusöl, Traubenkernöl, Schwarzkümmelöl, Kürbiskernöl, Borretschsamenöl, Sojaöl, Baumwollsamenöl, Maiskeimöl, Weizenkeimöl, Rapsöl, Sonnenblumenöl, Erdnussöl, Aprikosenkernöl, Pistazienkernöl, Mandelöl, Olivenöl, Macadamianussöl, Avocadoöl, Sanddornöl, Sanddornkernöl, Sesamöl, Hanföl, Haselnussöl, Nachtkerzenöl, Wildrosenöl, Kokosöl, Jojobaöl, Leinöl, Mohnöl, Palmöl, Palmkernöl, Arganöl, Algenöl, Perillaöl, Senföl, Sheaöl, Zedernöl, Reisöl, Leindotteröl, Distelöl, Walnussöl, insbesondere aus der Gruppe, enthaltend Sojaöl, Sonnenblumenöl und Rapsöl.

Die zur Herstellung der Polyesteralkohole bi) eingesetzten Fettsäuren sind vorzugsweise gesättigte oder ungesättigte Fettsäuren mit 4 bis 46, besonders bevorzugt 8 bis 24 und insbesondere 12 bis 22 Kohlenstoffatomen in der Kette.

Die Fettsäuren sind vorzugsweise ausgewählt aus der Gruppe, enthaltend Laurinsäure, Myristinsäure, Palmitinsäure, Stearinsäure, Ölsäure, Linolsäure, Linolensäure, Ricinolsäure, Arachinsäure und Arachidonsäure, vorzugsweise aus der Gruppe, enthaltend Ölsäure, Linolsäure und Linolensäure. Insbesondere wird Ölsäure eingesetzt.

Die zur Herstellung der Polyesteralkohole bi) eingesetzten mindestens zweifunktionellen Carbonsäuren sind vorzugsweise ausgewählt aus der Gruppe, enthaltend Adipinsäure, Malonsäure, Oxalsäure, Bernsteinsäure, Glutarsäure, Pimelinsäure, Suberinsäure, Azelainsäure, Sebacinsäure und Mischungen aus mindestens zwei der genannten Säuren, besonders bevorzugt aus der Gruppe, enthaltend Adipinsäure, Bernsteinsäure und Glutarsäure. Insbesondere ist die aliphatische, mindestens zweifunktionelle Carbonsäure Adipinsäure.

Die zur Herstellung der Polyesteralkohole bi) eingesetzten aliphatischen, mindestens zweifunktionellen Alkohole sind vorzugsweise ausgewählt aus der Gruppe, enthaltend Ethylenglykol, Diethylenglykol, Triethylenglykol, Propylenglykol, Dipropylenglykol, 1,4-Butandiol, 3-Methyl-1,5-pentandiol, 2-Methyl-1,3-propandiol, 1,5-Pentandiol, Neopentylglykol, 1,6-Hexandiol, 1,10-Decandiol, Glycerin, Trimethylolpropan, Petaerythrit und Sorbit sowie Mischungen aus mindestens zwei der genannten Alkohole, besonders bevorzugt aus der Gruppe, enthaltend Ethylenglykol, Diethylenglykol, Glycerin, Trimethylolpropan, Petaerythrit und Sorbit sowie Mischungen aus mindestens zwei der genannten Alkohole.

Die Polyesteralkohole bi) weisen vorzugsweise eine Hydroxylzahl im Bereich zwischen 250 und 600 mgKOH/g, insbesondere 300 und 550 mgKOH/g, auf.

Die Funktionalität der Polyesteralkohole bi) liegt vorzugsweise im Bereich zwischen 2,5 und 4,5, insbesondere zwischen 3 und 4,5.

Bei der Herstellung der Polyesteralkohole bi) werden vorzugsweise 10 bis 50 Mol-% der aliphatischen, mindestens zweifunktionellen Carbonsäure, 3 bis 20 Mol-% der Fettsäure und/oder 1 bis 8 Mol-% des Pflanzenöls und 40 bis 80 Mol-% des aliphatischen, mindestens zweifunktionellen Alkohols zur Umsetzung gebracht, wobei sich die Mol-% auf 100 Mol-% ergänzen.

Besonders bevorzugt werden bei der Herstellung der Polyesteralkohole bi) 20 bis 40 Mol-% der aliphatischen, mindestens zweifunktionellen Carbonsäure, 5 bis 15 Mol-% der Fettsäure und/oder 2 bis 6 Mol-% des Pflanzenöls und 50 bis 65 Mol-% des aliphatischen, mindestens zweifunktionellen Alkohols zur Umsetzung gebracht, wobei sich die Mol-% auf 100 Mol-% ergänzen.

Insbesondere werden bei der Herstellung der Polyesteralkohole bi) 30 bis 40 Mol-% der aliphatischen, mindestens zweifunktionellen Carbonsäure, 5 bis 10 Mol-% der Fettsäure und/oder 2 bis 4 Mol-% des Pflanzenöls und 55 bis 60 Mol-% des aliphatischen, mindestens zweifunktionellen Alkohols zur Umsetzung gebracht, wobei sich die Mol-% auf 100 Mol-% ergänzen.

Die Polyesteralkohole bi) können prinzipiell geringe Gehalte an aromatischen Anteilen enthalten, ohne dass sich die Eigenschaften der Verbindungen signifikant ändern. Der Anteil an Aromaten beträgt dabei maximal 20 Gew.-%, insbesondere maximal 10 Gew.-%, bezogen auf das Gewicht des Polyesteralkohols bi). Unter "Aromat" wird der aromatische Ring C₆H₆ verstanden.

Die Herstellung der Polyesteralkohole bi) erfolgt nach üblichen Verfahren durch Umsetzung der zweifunktionellen Carbonsäure, der Fettsäuren beziehungsweise der Pflanzenöle und der mindestens zweifunktionellen Alkohole unter üblichen Veresterungsbedingungen. Vorzugsweise wird die Umsetzung unter Verwendung von Katalysatoren durchgeführt.

Die Polyesteralkohole bi) können allein oder vorzugsweise im Gemisch mit anderen Verbindungen mit mindestens zwei mit Isocyanatgruppen reaktiven Wasserstoffatomen eingesetzt werden. Vorzugsweise handelt es sich bei den weiteren Verbindungen mit mindestens zwei mit Isocyanatgruppen reaktiven Wasserstoffatomen um Polyetheralkohole und/oder Polyesteralkohole, besonders bevorzugt um Polyetheralkohole.

Die Komponente b) kann zu 100 Gew.-% aus mindestens einem Polyesteralkohol bi) bestehen. Vorzugsweise liegt der Gehalt an bi) in der Komponente b) zwischen 60 und 100 Gew.-%, insbesondere zwischen 30 und 100 Gew.-%.

Zu den übrigen für das erfindungsgemäße Verfahren eingesetzten Ausgangsverbindungen ist im einzelnen folgendes zu sagen:

Als organische Polyisocyanate a) kommen vorzugsweise aromatische mehrwertige Isocyanate in Betracht.

Im einzelnen seien beispielhaft genannt 2,4- und 2,6-Toluylen-diisocyanat (TDI) und die entsprechenden Isomerengemische, 4,4'-, 2,4'- und 2,2'-Diphenylmethandiisocyanat (MDI) und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Isocyanurat- und/oder Urethangruppen enthaltende Di- und/oder Polyisocyanate. Die modifizierten Polyisocyanate können gegebenenfalls miteinander oder mit unmodifizierten organischen Polyisocyanaten wie 2,4'-, 4,4'-Diphenylmethandiisocyanat, Roh-MDI, 2,4- und/oder 2,6-Toluylen-diisocyanat gemischt werden.

Daneben können auch Umsetzungsprodukte von mehrwertigen Isocyanaten mit mehrwertigen Polyolen, sowie deren Mischungen mit anderen Di- und Polyisocyanaten Verwendung finden.

Besonders bewährt hat sich als organisches Polyisocyanat Roh-MDI mit einem NCO-Gehalt von 29 bis 33 Gew.-% und einer Viskosität bei 25 °C im Bereich von 150 bis 1000 mPa.s.

Als Verbindungen mit mindestens zwei gegenüber Isocyanat reaktiven Wasserstoffatomen b), die gemeinsam mit den erfindungsgemäß eingesetzten Polyetheralkoholen bi) verwendet werden können, kommen insbesondere Polyetheralkohole und/oder Polyesteralkohole mit OH-Zahlen im Bereich von 100 bis 1200 mgKOH/g zum Einsatz.

Die gemeinsam mit den erfindungsgemäß eingesetzten Polyesteralkoholen bi) eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die gemeinsam mit den erfindungsgemäß eingesetzten Polyesteralkoholen bi) verwendeten Polyetheralkohole haben zumeist eine Funktionalität zwischen 2 und 8, insbesondere 3 bis 8.

Insbesondere kommen Polyetherpolyole, die nach bekannten Verfahren, beispielsweise durch anionische Polymerisation von Alkylenoxiden in Gegenwart von Katalysatoren, vorzugsweise Alkalihydroxiden, hergestellt werden, zum Einsatz.

Als Alkylenoxide werden zumeist Ethylenoxid und/oder Propylenoxid, vorzugsweise reines 1,2-Propylenoxid eingesetzt.

Als Startmoleküle kommen insbesondere Verbindungen mit mindestens 3, vorzugsweise 4 bis 8 Hydroxylgruppen oder mit mindestens zwei primären Aminogruppen im Molekül zum Einsatz.

Als Startmoleküle mit mindestens 3, vorzugsweise 4 bis 8 Hydroxylgruppen im Molekül werden vorzugsweise Trimethylopropan, Glycerin, Pentaerythrit, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd und Dialkanolaminen sowie Melamin eingesetzt.

Als Startmoleküle mit mindestens zwei primären Aminogruppen im Molekül werden vorzugsweise aromatische Di- und/oder Polyamine, beispielsweise Phenylendiamine, 2,3-, 2,4-, 3,4- und 2,6-Toluylendiamin und 4,4'-, 2,4'- und 2,2'-Diamino-diphenylmethan sowie aliphatische Di- und Polyamine, wie Ethylendiamin, eingesetzt.

Die Polyetherpolyole besitzen eine Funktionalität von vorzugsweise 3 bis 8 und Hydroxylzahlen von vorzugsweise 100 mgKOH/g bis 1200 mgKOH/g und insbesondere 240 mgKOH/g bis 570 mgKOH/g.

Zu den Verbindungen mit mindestens zwei gegenüber Isocyanat reaktiven Wasserstoffatomen b) gehören auch die gegebenenfalls mitverwendeten Kettenverlängerer und Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerer und/oder Vernetzer verwendet werden vorzugsweise Alkanolamine und insbesondere Diole und/oder Triole mit Molekulargewichten kleiner als 400, vorzugsweise 60 bis 300.

Kettenverlängerer, Vernetzer oder Mischungen davon werden zweckmäßigerweise in einer Menge von 1 bis 20 Gew.-%, vorzugsweise 2 bis 5 Gew.-%, bezogen auf die Polyolkomponente b), eingesetzt.

Weitere Angaben zu den verwendeten Polyetheralkoholen und Polyesteralkoholen sowie ihrer Herstellung finden sich beispielsweise im Kunststoffhandbuch, Band 7 "Polyurethane", herausgegeben von Günter Oertel, Carl-Hanser-Verlag München, 3. Auflage, 1993.

Das erfindungsgemäße Verfahren wird üblicherweise in Anwesenheit von Treibmitteln c), Flammschutzmitteln, Katalysatoren und Zellstabilisatoren sowie, falls erforderlich weiteren Hilfs- und/oder Zusatzstoffen durchgeführt.

Als Treibmittel c) kann Wasser verwendet werden, das mit Isocyanatgruppen unter Abspaltung von Kohlendioxid reagiert. In Kombination mit oder an Stelle von Wasser können auch sogenannte physikalische Treibmittel eingesetzt werden. Dabei handelt es sich um gegenüber den Einsatzkomponenten inerte Verbindungen, die zumeist bei

Raumtemperatur flüssig sind und bei den Bedingungen der Urethanreaktion verdampfen. Vorzugsweise liegt der Siedepunkt dieser Verbindungen unter 50 °C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane, Fluoralkane (HFC) und Fluor und Chlor enthaltende Alkane.

Die Verbindungen werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane und HFC mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane (HFC), die in der Troposphäre abgebaut werden können und deshalb für die Ozonschicht unschädlich sind, wie 1,1,1,3,3-Pentafluoropropan (HFC 245 fa) und Trifluormethan, Difluormethan, 1,1,1,3,3-Pentafluorbutan (HFC 365 mfc), 1,1,1,2-Tetrafluorethan, Difluorethan und Heptafluorpropan. Die genannten physikalischen Treibmittel können allein oder in beliebigen Kombinationen untereinander eingesetzt werden.

Besonders bevorzugt werden als Treibmittel c) die HFC 245fa und 365mfc und/oder aliphatische und/oder cycloaliphatische Kohlenwasserstoffe eingesetzt

Dabei werden bei der Herstellung von Hartschaumstoffen nach dem Doppelbandverfahren als Treibmittel c) vorzugsweise Alkane, insbesondere n-Pentan und bei Spritzschaum vorzugsweise HFC eingesetzt.

Als Flammschutzmittel können organische Phosphorsäure- und oder Phosphonsäureester zur Anwendung kommen. Vorzugsweise werden gegenüber Isocyanatgruppen nicht reaktive Verbindungen eingesetzt. Auch Chlor enthaltende Phosphorsäureester gehören zu den bevorzugten Verbindungen. Typische Vertreter dieser Gruppe von Flammschutzmitteln sind Triethylphosphat, Diphenylkresylphosphat, Tris-(Chlorpropyl)-phosphat sowie Diethylethanphoshonat.

Daneben können auch Brom enthaltende Flammschutzmittel zum Einsatz kommen. Als Brom enthaltende Flammschutzmittel werden vorzugsweise gegenüber der Isocyanatgruppe reaktive Gruppen aufweisende Verbindungen eingesetzt. Derartige Verbindungen sind Ester der Tetrabromphtalsäure mit aliphatischen Diolen und Alkoxylierungsprodukte des Dibombutendiols. Auch Verbindungen, die sich aus der Reihe der bromierten, OH-Gruppen enthaltenden Neopentylverbindungen ableiten, können zur Anwendung kommen.

Als Katalysatoren werden insbesondere Verbindungen eingesetzt, welche die Reaktion der Isocyanatgruppen mit den mit Isocyanatgruppen reaktiven Gruppen stark beschleunigen.

Solche Katalysatoren sind stark basische Amine, wie z. B. sekundäre aliphatische Amine, Imidazole, Amidine, sowie Alkanolamine.

Falls in den Hartschaumstoff Isocyanuratgruppen eingebaut werden sollen, werden spezielle Katalysatoren benötigt. Als Isocyanurat-Katalysatoren werden üblicherweise Metallcarboxylate, insbesondere Kaliumacetat und dessen Lösungen, eingesetzt. Die Katalysatoren können, je nach Erfordernis, allein oder in beliebigen Mischungen untereinander eingesetzt werden.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Flammschutzmittel, Hydrolyseschutzmittel, Antistatika, fungistatisch und bakteriostatisch wirkende Mittel zum Einsatz.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl-Hanser-Verlag München, 1. Auflage, 1966, 2. Auflage, 1983 und 3. Auflage, 1993.

Zur Herstellung der Polyurethan-Hartschaumstoffe werden die Polyisocyanate a), und die Polyolkomponente b) in solchen Mengen zur Umsetzung gebracht, dass der Isocyanatindex in einem Bereich zwischen 100 und 400, vorzugsweise zwischen 100 und 350 und besonders bevorzugt zwischen 110 und 330 liegt. Der Isocyanatindex ist das molare Verhältnis von Isocyanatgruppen zu mit Isocyanatgruppen reaktiven Gruppen, multipliziert mit 100.

Die Polyurethan-Hartschaumstoffe können diskontinuierlich oder kontinuierlich mit Hilfe bekannter Mischvorrichtungen hergestellt werden.

Bevorzugt werden die erfindungsgemäßen Hartschaumstoffe auf kontinuierlich arbeitenden Doppelbandanlagen hergestellt. Hier werden mit einer Hochdruckmaschine die Polyol- und die Isocyanatkomponente dosiert und in einem Mischkopf vermischt. Dem Polyolgemisch können zuvor mit separaten Pumpen Katalysatoren und /oder Treibmittel zudosiert werden. Das Reaktionsgemisch wird kontinuierlich auf die untere Deckschicht aufgetragen. Die untere Deckschicht mit dem Reaktionsgemisch und die obere Deckschicht laufen in das Doppelband ein. Hier schäumt das Reaktionsgemisch auf und härtet aus. Nach dem Verlassen des Doppelbandes wird der endlose Strang in den gewünschten Abmessungen zerschnitten. Auf diese Weise können Sandwichelemente mit metallischen Deckschichten oder Dämmelemente mit flexiblen Deckschichten hergestellt werden.
Die Ausgangskomponenten werden zumeist bei einer Temperatur von 15 bis 35 °C, vorzugsweise von 20 bis 30 °C gemischt. Das Reaktionsgemisch kann mit Hoch- oder Niederdruckdosiermaschinen in geschlossene Stützwerkzeuge gegossen werden. Nach dieser Technologie werden z. B. diskontinuierlich Sandwichelemente gefertigt.

Die nach dem erfindungsgemäßen Verfahren hergestellten PUR- und PUR/PIR-Hartschaumstoffe weisen gute Oberflächen mit wenigen Fehlstellen und eine gute Härtung auf. Durch den Einsatz der Polyesteralkohole bi) kann die Viskosität der Polyolkomponente b) gesenkt und die Löslichkeit von Alkanen, insbesondere Pentan, in der Polyolkomponente erhöht werden. Die niedrige Viskosität der Polyolkomponente b) ermöglicht die Herstellung der Hartschaumstoffe auch mittels Hochdruck-Sprühschaum-Maschinen.

Die Erfindung soll an den nachfolgenden Beispielen näher erläutert werden.

### Beispiel 1a

Aus 25 Gew.-Teilen eines Polyesteralkohols mit einer Hydroxylzahl von 502 mgKOH/g, hergestellt durch Umsetzung von 35,5 Gew.-Teilen Adipinsäure, 22,8 Gew.-Teilen Ölsäure und 41,7 Gew.-Teilen Glyzerin (Polyesteralkohol 1),
42,5 Gew.-Teilen eines Polyetheralkohols mit einer Hydroxylzahl von 490 mgKOH/g, basierend auf Propylenoxid und Mischung aus Sucrose und Glyzerin als Starter (Polyetheralkohol 1),
18 Gew.-Teilen Tris-2-Chlorisopropylphosphat,
10 Gew.-Teilen eines Polyetheralkohols mit einer Hydroxylzahl von 470 mgKOH/g, basierend auf Propylenoxid und Ethylendiamin als Starter (Polyetheralkohol 2),
3 Gew.-Teilen Tegostab^{®} B4864 der Firma Goldschmidt,
1,5 Gew.-Teilen Wasser und
7 Gew.-Teilen n-Pentan
wurde durch Vermischen eine Polyolkomponente hergestellt.

Diese wurde auf einer Doppelbandanlage mit einem Polymer-MDI mit einem NCO-Gehalt von 31,5 Gew.-% (Lupranat^{®} M50 der BASF AG) in Anwesenheit von Dimethylcyclohexylamin und einem Gemisch aus Wasser, Dipropylenglykol und Glyzerin im Gewichtsverhältnis 60:31:9 (ZM 99) bei einem Isocyanatindex von 110 umgesetzt. Die Mengen an Dimethylcyclohexylamin und ZM99 wurden so ausgewählt, dass eine Gelzeit von 50 Sekunden und der resultierende Schaum eine Dichte von 38 g/l aufwies.

### Beispiel 1b

Es wurde verfahren wie in Beispiel 1a, jedoch wurden an Stelle von Polyesteralkohol 1 25 Gew.-Teile eines Polyesteralkohols mit einer Hydroxylzahl von 402 mgKOH/g, hergestellt durch Umsetzung von 29,8 Gew.-Teilen Adipinsäure, 19,2 Gew.-Teilen Ölsäure und 51,0 Gew.-Teilen Trimethylolpropan (Polyesteralkohol 2) eingesetzt.

### Beispiel 2a

Aus
52,5 Gew.-Teilen Polyesteralkohol 1,
15 Gew.-Teilen Polyetheralkohol 1,
18 Gew.-Teilen Tris-2-Chlorisopropylphosphat,
10 Gew.-Teilen Polyetheralkohol 2,
3 Gew.-Teilen Tegostab^{®} B8462der Firma Goldschmidt,
1,5 Gew.-Teilen Wasser und
7 Gew.-Teilen n-Pentan
wurde durch Vermischen eine Polyolkomponente hergestellt.

Diese wurde auf einer Doppelbandanlage mit einem Polymer-MDI mit einem NCO-Gehalt von 31,5 Gew.-% (Lupranat^{®} M50 der BASF AG) in Anwesenheit von Dimethylcyclohexylamin einem Gemisch aus Wasser, Dipropylenglykol und Glyzerin im Gewichtsverhältnis 60:31:9 (ZM 99) bei einem Isocyanatindex von 110 umgesetzt.

### Beispiel 2b

Es wurde verfahren wie in Beispiel 2a, jedoch wurden an Stelle von Polyesteralkohol 1 52,5 Gew.-Teile Polyesteralkohol 2 eingesetzt.

### Vergleichsbeispiel 1a

Es wurde verfahren wie in Beispiel 1a, jedoch wurden an Stelle von Polyesteralkohol 1 25 Gew.-Teile eines Polyesteralkohols mit einer Hydroxylzahl von 515 mgKOH/g, hergestellt durch Umsetzung von Adipinsäure mit Glyzerin (Polyesteralkohol 1V).

### Vergleichsbeispiel 1b

Es wurde verfahren wie in Beispiel 1a, jedoch wurden an Stelle von Polyesteralkohol 1 25 Gew.-Teile eines Polyesteralkohols mit einer Hydroxylzahl von 416 mgKOH/g, hergestellt durch Umsetzung von Adipinsäure mit Trimethylolpropan (Polyesteralkohol 2V).

### Vergleichbeispiel 2a

Es wurde verfahren wie in Beispiel 2a, jedoch wurden an Stelle von Polyesteralkohol 1 52,5 Gew.-Teile Polyesteralkohol 1V eingesetzt.

### Vergleichbeispiel 2b

Es wurde verfahren wie in Beispiel 2a, jedoch wurden an Stelle von Polyesteralkohol 1 52,5 Gew.-Teile Polyesteralkohol 2V eingesetzt.

Die Ergebnisse sind in den Tabellen 1 bis 4 dargestellt.

**Tabelle 1**

| Viskosität und Pentanlöslichkeit der Polyolkomponenten mit 25 Gew.-Teilen Polyesteralkohol | | | | |
|---|---|---|---|---|
| | Polyesteralkohol 1 | Polyesteralkohol 1V | Polyesteralkohol 2 | Polyesteralkohol 2V |
| Viskosität (mPas) bei 25 °C | 2340 | 6110 | 2860 | 6240 |
| Stabilität der Lösung mit Pentan | Stabil | Unstabil nach 24h | Stabil | Unstabil nach 24h |

**Tabelle 2**

| Viskosität und Pentanlöslichkeit der Polyolkomponenten mit 52,5 Gew.-Teilen Polyesteralkohol | | | | |
|---|---|---|---|---|
| | Polyesteralkohol 1 | Polyesteralkohol 1V | Polyesteralkohol 2 | Polyesteralkohol 2V |
| Viskosität (mPas) bei 25 °C | 2430 | 10900 | 3500 | 17700 |
| Stabilität der Lösung mit Pentan | Stabil | Unstabil nach 24h | Stabil | Unstabil nach 11 Tagen |

Die Ergebnisse in den Tabellen 1 und 2 zeigen, dass durch den Einbau der Ölsäure in den Polyesteralkohol die Viskosität der Polyolkomponente gesenkt und die Pentanlöslichkeit und die Stabilität der Mischung mit dem Pentan deutlich verbessert werden konnte.

**Tabelle 3**

| Härtung und Oberflächeneigenschaften der Schaumstoffe mit 25 Gew.-Teilen Polyesteralkohol | | | | |
|---|---|---|---|---|
| | Polyesteralkohol 1 | Polyesteralkohol 1V | Polyesteralkohol 2 | Polyesteralkohol 2V |
| Oberfläche (qualitativ) | Gut | Sehr schlecht | Sehr gut | Schlecht |
| Oberfläche (quantitativ) (%) | 1,0 | 9,0 | 0,3 | 3,2 |
| Härtung nach 3 min | 43 | 17 | 40 | 37 |
| Härtung nach 4 min | 62 | 29 | 63 | 55 |
| Härtung nach 5 min | 75 | 39 | 79 | 68 |
| Härtung nach 6 min | 87 | 45 | 93 | 79 |
| | | | | |
| Gewichtsteile DMCHA | 1,9 | 2,0 | 1,8 | 1,8 |
| Gewichtsteile ZM 99 | 0,9 | 2,1 | 0,4 | 1,0 |

**Tabelle 4**

| Härtung und Oberflächeneigenschaften der Schaumstoffe mit 52,5 Gew.-Teilen Polyesteralkohol | | | | |
|---|---|---|---|---|
| | Polyesteralkohol 1 | Polyesteralkohol 1V | Polyesteralkohol 2 | Polyesteralkohol 2V |
| Oberfläche (qualitativ) | Gut | Schaumkollaps | Sehr gut | Schlecht |
| Oberfläche (quantitativ) (%) | 2,3 | - | 0,5 | 4,5 |
| Härtung nach 3 min | 27 | - | 39 | 34 |
| Härtung nach 4 min | 36 | - | 56 | 46 |
| Härtung nach 5 min | 46 | - | 73 | 53 |
| Härtung nach 6 min | 53 | - | 85 | 62 |
| | | | | |
| Gewichtsteile DMCHA | 1,5 | - | 1,2 | 1,4 |
| Gewichtsteile ZM 99 | 1,6 | - | 1,4 | 2,9 |

Die Tabellen zeigen, dass bei Einsatz der erfindungsgemäßen Polyesteralkohole die Oberflächeneigenschaften der Schaumstoffe deutlich verbessert sind. Außerdem ist, trotz vermindertem Einsatz von Katalysator, die Aushärtung der Schaumstoffe besser. Auch mit einem hohen Anteil von Polyesteralkohol (Tabelle 4) konnten stabile Schäume erhalten werden.

Überraschenderweise war die Aushärtung der Schäume trotz der geringeren Funktionalität der Polyesteralkohole verbessert. Außerdem war die Oberfläche der Schäume verbessert, insbesondere traten weniger Fehlstellen auf.

Die Härtung wurde mit dem Bolzentest ermittelt. Dazu wird 3, 4, 5 und 6 Minuten nach Vermischung der Komponenten in einem Polystyrol-Becher ein Stahlbolzen mit einer Kugelkalotte von 10 mm Radius mit einer Zug/Druckprüfmaschine 10mm tief in den entstandenen Schaumpilz eingedrückt. Die erforderliche Maximalkraft in N ist ein Maß für die Härtung des Schaumstoffs. Angegeben ist jeweils die gemessene Maximalkraft nach 3, 4, 5, 6 Minuten und die Summe der Härtung nach 3, 4, 5, 6 Minuten.

Bei der quantitativen Beurteilung der Oberfläche wurde die Oberfläche des Schaums von rechts und danach von links beleuchtet und jeweils fotografiert. Die Bilder wurden überlagert und mit einer Bildanalyse-Software analysiert. Die Fehlstellen an der Oberfläche erscheinen dabei als schwarze Flächen. Der Prozentsatz der schwarzen Flächen an der gesamten Oberfläche ist das Maß für die Strukturdefekte des Schaums.

## Patentansprüche

1. Verfahren zur Herstellung von Polyurethan-Hartschaumstoffen durch Umsetzung von
a) Polyisocyanaten mit
b) Verbindungen mit mindestens zwei mit Isocyanatgruppen reaktiven Wasserstoffatomen in Anwesenheit von
c) Treibmitteln,
**dadurch gekennzeichnet, dass** die Komponente b) mindestens einen Polyesteralkohol bi) mit einer Funktionalität von 1,5 bis 4,5 und einer Hydroxylzahl im Bereich zwischen 200 und 800 mgKOH/g enthält, zu dessen Herstellung mindestens eine aliphatische, mindestens zweifunktionelle Carbonsäure, mindestens ein aliphatischer, mindestens zweifunktioneller Alkohols sowie mindestens ein Pflanzenöl, und/oder mindestens eine Fettsäure eingesetzt wurde.

2. Verfahren nach Anspruch 1, **dadurch gekennzeichnet, dass** die Pflanzenöle ausgewählt sind aus der Gruppe, enthaltend Rizinusöl, Traubenkernöl, Schwarzkümmelöl, Kürbiskernöl, Borretschsamenöl, Sojaöl, Baumwollsamenöl, Maiskeimöl, Weizenkeimöl, Rapsöl, Sonnenblumenöl, Erdnussöl, Aprikosenkernöl, Pistazienkernöl, Mandelöl, Olivenöl, Macadamianussöl, Avocadoöl, Sanddornöl, Sanddornkernöl, Sesamöl, Hanföl, Haselnussöl, Nachtkerzenöl, Wildrosenöl, Kokosöl, Jojobaöl, Leinöl, Mohnöl, Palmöl, Palmkernöl, Arganöl, Algenöl, Perillaöl, Senföl, Sheaöl, Zedernöl, Reisöl, Leindotteröl, Distelöl, Walnussöl.

3. Verfahren nach Anspruch 1, **dadurch gekennzeichnet, dass** die Pflanzenöle ausgewählt sind aus der Gruppe, enthaltend Sojaöl, Sonnenblumenöl und Rapsöl.

4. Verfahren nach Anspruch 1, **dadurch gekennzeichnet, dass** die Fettsäuren gesättigte oder ungesättigte Fettsäuren mit 4 bis 46 Kohlenstoffatomen in der Kette sind.

5. Verfahren nach Anspruch 1, **dadurch gekennzeichnet, dass** die Fettsäuren ausgewählt sind aus der Gruppe, enthaltend Laurinsäure, Myristinsäure, Palmitinsäure, Stearinsäure, Ölsäure, Linolsäure, Linolensäure, Ricinolsäure Arachinsäure und Arachidonsäure.

6. Verfahren nach Anspruch 1, **dadurch gekennzeichnet, dass** die Fettsäure Ölsäure ist.

7. Verfahren nach Anspruch 1, **dadurch gekennzeichnet, dass** die aliphatische, mindestens zweifunktionelle Carbonsäure ausgewählt ist aus der Gruppe, enthaltend Adipinsäure, Malonsäure, Oxalsäure, Bernsteinsäure, Glutarsäure, Pimelinsäure, Suberinsäure, Azelainsäure, Sebacinsäure und Mischungen aus mindestens zwei der genannten Säuren.

8. Verfahren nach Anspruch 1, **dadurch gekennzeichnet, dass** die aliphatische, mindestens zweifunktionelle Carbonsäure ausgewählt ist aus der Gruppe, enthaltend Adipinsäure, Bernsteinsäure und Glutarsäure.

9. Verfahren nach Anspruch 1, **dadurch gekennzeichnet, dass** die aliphatische, mindestens zweifunktionelle Carbonsäure Adipinsäure ist.

10. Verfahren nach Anspruch 1, **dadurch gekennzeichnet, dass** der aliphatische, mindestens zweifunktionelle Alkohol ausgewählt ist aus der Gruppe, enthaltend Ethylenglykol, Diethylenglykol, Triethylenglykol, Propylenglykol, Dipropylenglykol, 1,4-Butandiol, 3-Methyl-1,5-pentandiol, 2-Methyl-1,3-propandiol, 1,5-Pentandiol, Neopentylglykol, 1,6-Hexandiol, 1,10-Decandiol, Glycerin, Trimethylolpropan, Petaerythrit und Sorbit sowie Mischungen aus mindestens zwei der genannten Alkohole.

11. Verfahren nach Anspruch 1, **dadurch gekennzeichnet, dass** der aliphatische, mindestens zweifunktionelle Alkohol ausgewählt ist aus der Gruppe, enthaltend Ethylenglykol, Diethylenglykol, Glycerin, Trimethylolpropan, Petaerythrit und Sorbit sowie Mischungen aus mindestens zwei der genannten Alkohole.

12. Verfahren nach Anspruch 1, **dadurch gekennzeichnet, dass** der Polyesteralkohol bi) eine Hydroxylzahl im Bereich zwischen 250 und 600 mgKOH/g aufweist.

13. Verfahren nach Anspruch 1, **dadurch gekennzeichnet, dass** der Polyesteralkohol bi) eine Hydroxylzahl im Bereich zwischen 300 und 550 mgKOH/g aufweist.

14. Verfahren nach Anspruch 1, **dadurch gekennzeichnet, dass** der Polyesteralkohol bi) eine Funktionalität im Bereich zwischen 2,5 und 4,5 aufweist.

15. Verfahren nach Anspruch 1, **dadurch gekennzeichnet, dass** der Polyesteralkohol bi) eine Funktionalität im Bereich zwischen 3 und 4,5 aufweist.

16. Verfahren nach Anspruch 1, **dadurch gekennzeichnet, dass** bei der Herstellung des Polyesteralkohols bi) 10 bis 50 Mol-% der aliphatischen, mindestens zweifunktionellen Carbonsäure, 3 bis 20 Mol-% der Fettsäure oder 1 bis 8 Mol-% des Pflanzenöls und 40 bis 80 Mol-% des aliphatischen, mindestens zweifunktionellen Alkohols zur Umsetzung gebracht werden, wobei sich die Mol-% auf 100 Mol-% ergänzen.

17. Verfahren nach Anspruch 1, **dadurch gekennzeichnet, dass** bei der Herstellung des Polyesteralkohols bi) 20 bis 40 Mol-% der aliphatischen, mindestens zweifunktionellen Carbonsäure, 5 bis 15 Mol-% der Fettsäure oder 2 bis 6 Mol-% des Pflanzenöls und 50 bis 65 Mol-% des aliphatischen, mindestens zweifunktionellen Alkohols zur Umsetzung gebracht werden, wobei sich die Mol-% auf 100 Mol-% ergänzen.

18. Verfahren nach Anspruch 1, **dadurch gekennzeichnet, dass** bei der Herstellung des Polyesteralkohols bi) 30 bis 40 Mol-% der aliphatischen, mindestens zweifunktionellen Carbonsäure, 5 bis 10 Mol-% der Fettsäure oder 2 bis 4 Mol-% des Pflanzenöls und 55 bis 60 Mol-% des aliphatischen, mindestens zweifunktionellen Alkohols zur Umsetzung gebracht werden, wobei sich die Mol-% auf 100 Mol-% ergänzen.

19. Verfahren nach Anspruch 1, **dadurch gekennzeichnet, dass** als Treibmittel c) Fluor und Chlor enthaltende Alkane, aliphatische und/oder cycloaliphatische Kohlenwasserstoffe eingesetzt werden.

20. Verfahren nach Anspruch 1, **dadurch gekennzeichnet, dass** die Umsetzung bei einem Index im Bereich von 100 bis 400 durchgeführt wird.

21. Verfahren nach Anspruch 1, **dadurch gekennzeichnet, dass** die Umsetzung auf einer Doppelband-Anlage durchgeführt wird.

22. Polyurethan-Hartschaumstoffe, hergestellt nach einem der Ansprüche 1 bis -

23. Polyesteralkohole mit einer Funktionalität von 1,5 bis 6 und einer Hydroxylzahl im Bereich zwischen 200 und 800 mgKOH/g, hergestellt durch Umsetzung von 10 bis 50 Mol-% einer aliphatischen, mindestens zweifunktionellen Carbonsäure, 3 bis 20 Mol-% einer Fettsäure oder 1 bis 8 Mol-% eines Pflanzenöls und 40 bis 80 Mol-% eines aliphatischen, mindestens zweifunktionellen Alkohols zur Umsetzung gebracht werden, wobei sich die Mol-% auf 100 Mol-% ergänzen.

## Claims

1. A process for producing rigid polyurethane foams by reacting
a) polyisocyanates with
b) compounds having at least two hydrogen atoms which are reactive toward isocyanate groups in the presence of
c) blowing agents,
wherein the component b) comprises at least one polyester alcohol bi) which has a functionality of from 1.5 to 4.5 and a hydroxyl number in the range from 200 to 800 mg KOH/g and has been prepared using at least one aliphatic, at least bifunctional carboxylic acid, at least one aliphatic, at least bifunctional alcohol and also at least one vegetable oil and/or at least one fatty acid.

2. The process according to claim 1, wherein the vegetable oils are selected from the group consisting of castor oil, grape seed oil, black cumin oil, pumpkin seed oil, borage seed oil, soybean oil, cottonseed oil, maize oil, wheat germ oil, rapeseed oil, sunflower oil, peanut oil, apricot kernel oil, pistachio oil, almond oil, olive oil, macadamia nut oil, avocado oil, sea buckthorn oil, sea buckthorn seed oil, sesame oil, hemp oil, hazelnut oil, evening primrose oil, wild rose oil, coconut oil, jojoba oil, linseed oil, poppy seed oil, palm oil, palm kernel oil, argan oil, algal oil, perilla oil, mustard oil, shea oil, cedar oil, rice oil, cameline oil, safflower oil, walnut oil.

3. The process according to claim 1, wherein the vegetable oils are selected from the group consisting of soybean oil, sunflower oil and rapeseed oil.

4. The process according to claim 1, wherein the fatty acids are saturated or unsaturated fatty acids having from 4 to 46 carbon atoms in the chain.

5. The process according to claim 1, wherein the fatty acids are selected from the group consisting of lauric acid, myristic acid, palmitic acid, stearic acid, oleic acid, linoleic acid, linolenic acid, ricinoleic acid, arachic acid and arachidonic acid.

6. The process according to claim 1, wherein the fatty acid is oleic acid.

7. The process according to claim 1, wherein the aliphatic, at least bifunctional carboxylic acid is selected from the group consisting of adipic acid, malonic acid, oxalic acid, succinic acid, glutaric acid, pimelic acid, suberic acid, azelaic acid, sebacic acid and mixtures of at least two of the acids mentioned.

8. The process according to claim 1, wherein the aliphatic, at least bifunctional carboxylic acid is selected from the group consisting of adipic acid, succinic acid and glutaric acid.

9. The process according to claim 1, wherein the aliphatic, at least bifunctional carboxylic acid is adipic acid.

10. The process according to claim 1, wherein the aliphatic, at least bifunctional alcohol is selected from the group consisting of ethylene glycol, diethylene glycol, triethylene glycol, propylene glycol, dipropylene glycol, 1,4-butanediol, 3-methyl-1,5-pentanediol, 2-methyl-1 ,3-propanediol, 1,5-pentanediol, neopentyl glycol, 1,6-hexanediol, 1,10-decanediol, glycerol, trimethylolpropane, pentaerythritol and sorbitol and mixtures of at least two of the alcohols mentioned.

11. The process according to claim 1, wherein the aliphatic, at least bifunctional alcohol is selected from the group consisting of ethylene glycol, diethylene glycol, glycerol, trimethylolpropane, pentaerythritol and sorbitol and mixtures of at least two of the alcohols mentioned.

12. The process according to claim 1, wherein the polyester alcohol bi) has a hydroxyl number in the range from 250 to 600 mg KOH/g.

13. The process according to claim 1, wherein the polyester alcohol bi) has a hydroxyl number in the range from 300 to 550 mg KOH/g.

14. The process according to claim 1, wherein the polyester alcohol bi) has a functionality in the range from 2.5 to 4.5.

15. The process according to claim 1, wherein the polyester alcohol bi) has a functionality in the range from 3 to 4.5.

16. The process according to claim 1, wherein the polyester alcohol bi) is prepared by reacting from 10 to 50 mol% of the aliphatic, at least bifunctional carboxylic acid, from 3 to 20 mol% of the fatty acid or from 1 to 8 mol% of the vegetable oil and from 40 to 80 mol% of the aliphatic, at least bifunctional alcohol, with the molar percentages adding up to 100 mol%.

17. The process according to claim 1, wherein the polyester alcohol bi) is prepared by reacting from 20 to 40 mol% of the aliphatic, at least bifunctional carboxylic acid, from 5 to 15 mol% of the fatty acid or from 2 to 6 mol% of the vegetable oil and from 50 to 65 mol% of the aliphatic, at least bifunctional alcohol, with the molar percentages adding up to 100 mol%.

18. The process according to claim 1, wherein the polyester alcohol bi) is prepared by reacting from 30 to 40 mol% of the aliphatic, at least bifunctional carboxylic acid, from 5 to 10 mol% of the fatty acid or from 2 to 4 mol% of the vegetable oil and from 55 to 60 mol% of the aliphatic, at least bifunctional alcohol, with the molar percentages adding up to 100 mol%.

19. The process according to claim 1, wherein alkanes comprising fluorine and chlorine, aliphatic and/or cycloaliphatic hydrocarbons are used as blowing agents c).

20. The process according to claim 1, wherein the reaction is carried out at an index in the range from 100 to 400.

21. The process according to claim 1, wherein the reaction is carried out on a double belt unit.

22. A rigid polyurethane foam prepared according to any of claims 1 to 21.

23. A polyester alcohol which has a functionality of from 1.5 to 6 and a hydroxyl number in the range from 200 to 800 mg KOH/g and has been prepared by reaction of from 10 to 50 mol% of an aliphatic, at least bifunctional carboxylic acid, from 3 to 20 mol% of a fatty acid or from 1 to 8 mol% of a vegetable oil and from 40 to 80 mol% of an aliphatic, at least bifunctional alcohol, with the molar percentages adding up to 100 mol%.

## Revendications

1. Procédé pour la fabrication de mousses rigides de polyuréthanne, par mise en réaction
a) de polyisocyanates avec
b) des composés comportant au moins deux atomes d'hydrogène réactifs avec des groupes isocyanate, en présence
c) d'agents d'expansion,
**caractérisé en ce que** le composant b) contient au moins un polyester-alcool bi) ayant une fonctionnalité de 1,5 à 4,5 et un indice de groupes hydroxy dans la plage comprise entre 200 et 800 mg de KOH/g, pour la préparation duquel on a utilisé au moins un acide carboxylique aliphatique au moins bifonctionnel, au moins un alcool aliphatique au moins bifonctionnel ainsi qu'au moins une huile végétale et/ou au moins un acide gras.

2. Procédé selon la revendication 1, **caractérisé en ce que** les huiles végétales sont choisies dans le groupe contenant l'huile de ricin, l'huile de pépins de raisin, l'huile de nigelle, l'huile de graines de courge, l'huile de graines de bourrache, l'huile de soja, l'huile de coton, l'huile de germes de maïs, l'huile de germes de blé, l'huile de colza, l'huile de tournesol, l'huile d'arachide, l'huile de noyaux d'abricot, l'huile de pistache, l'huile d'amande, l'huile d'olive, l'huile de noix de macadamia, l'huile d'avocat, l'huile d'argousier, l'huile de graines d'argousier, l'huile de sésame, l'huile de chènevis, l'huile de noisette, l'huile d'onagre, l'huile d'églantine, l'huile de coprah, l'huile de jojoba, l'huile de lin, l'huile d'oeillette, l'huile de palme, l'huile de palmiste, l'huile d'argan, l'huile d'algue, l'huile de périlla, l'huile de moutarde, l'huile de karité, l'huile de cèdre, l'huile de riz, l'huile de cameline, l'huile de carthame, l'huile de noix.

3. Procédé selon la revendication 1, **caractérisé en ce que** les huiles végétales sont choisies dans le groupe contenant l'huile de soja, l'huile de tournesol et l'huile de colza.

4. Procédé selon la revendication 1, **caractérisé en ce que** les acides gras sont des acides gras saturés ou insaturés ayant de 4 à 46 atomes de carbone dans la chaîne.

5. Procédé selon la revendication 1, **caractérisé en ce que** les acides gras sont choisis dans le groupe contenant l'acide laurique, l'acide myristique, l'acide palmitique, l'acide stéarique, l'acide oléique, l'acide linoléique, l'acide linolénique, l'acide ricinoléique, l'acide arachidique et l'acide arachidonique.

6. Procédé selon la revendication 1, **caractérisé en ce que** l'acide gras est l'acide oléique.

7. Procédé selon la revendication 1, **caractérisé en ce que** l'acide carboxylique aliphatique au moins bifonctionnel est choisi dans le groupe contenant l'acide adipique, l'acide malonique, l'acide oxalique, l'acide succinique, l'acide glutarique, l'acide pimélique, l'acide subérique, l'acide azélaïque, l'acide sébacique et des mélanges d'au moins deux des acides cités.

8. Procédé selon la revendication 1, **caractérisé en ce que** l'acide carboxylique aliphatique au moins bifonctionnel est choisi dans le groupe contenant l'acide adipique, l'acide succinique et l'acide glutarique.

9. Procédé selon la revendication 1, **caractérisé en ce que** l'acide carboxylique aliphatique au moins bifonctionnel est l'acide adipique.

10. Procédé selon la revendication 1, **caractérisé en ce que** l'alcool aliphatique au moins bifonctionnel est choisi dans le groupe contenant l'éthylèneglycol, le diéthylèneglycol, le triéthylèneglycol, le propylèneglycol, le dipropylèneglycol, le 1,4-butanediol, le 3-méthyl-1,5-pentanediol, le 2-méthyl-1,3-propanediol, le 1,5-pentanediol, le néopentylglycol, le 1,6-hexanediol, le 1,10-décanediol, le glycérol, le triméthylolpropane, le pentaérythritol et le sorbitol ainsi que des mélanges d'au moins deux des alcools cités.

11. Procédé selon la revendication 1, **caractérisé en ce que** l'alcool aliphatique au moins bifonctionnel est choisi dans le groupe contenant l'éthylèneglycol, le diéthylèneglycol, le glycérol, le triméthylolpropane, le pentaérythritol et le sorbitol ainsi que des mélanges d'au moins deux des alcools cités.

12. Procédé selon la revendication 1, **caractérisé en ce que** le polyester-alcool bi) présente un indice de groupes hydroxy dans la plage comprise entre 250 et 600 mg de KOH/g.

13. Procédé selon la revendication 1, **caractérisé en ce que** le polyester-alcool bi) présente un indice de groupes hydroxy dans la plage comprise entre 300 et 550 mg de KOH/g.

14. Procédé selon la revendication 1, **caractérisé en ce que** le polyester-alcool bi) présente une fonctionnalité dans la plage comprise entre 2,5 et 4,5.

15. Procédé selon la revendication 1, **caractérisé en ce que** le polyester-alcool bi) présente une fonctionnalité dans la plage comprise entre 3 et 4,5.

16. Procédé selon la revendication 1, **caractérisé en ce que** dans la préparation du polyester-alcool bi) on fait réagir 10 à 50 % en moles de l'acide carboxylique aliphatique au moins bifonctionnel, 3 à 20 % en moles de l'acide gras ou 1 à 8 % en moles de l'huile végétale et 40 à 80 % en moles de l'alcool aliphatique au moins bifonctionnel, les pourcentages en moles se complétant à 100 % en moles.

17. Procédé selon la revendication 1, **caractérisé en ce que** dans la préparation du polyester-alcool bi) on fait réagir 20 à 40 % en moles de l'acide carboxylique aliphatique au moins bifonctionnel, 5 à 15 % en moles de l'acide gras ou 2 à 6 % en moles de l'huile végétale et 50 à 65 % en moles de l'alcool aliphatique au moins bifonctionnel, les pourcentages en moles se complétant à 100 % en moles.

18. Procédé selon la revendication 1, **caractérisé en ce que** dans la préparation du polyester-alcool bi) on fait réagir 30 à 40 % en moles de l'acide carboxylique aliphatique au moins bifonctionnel, 5 à 10 % en moles de l'acide gras ou 2 à 4 % en moles de l'huile végétale et 55 à 60 % en moles de l'alcool aliphatique au moins bifonctionnel, les pourcentages en moles se complétant à 100 % en moles.

19. Procédé selon la revendication 1, **caractérisé en ce qu'**on utilise comme agent d'expansion c) des alcanes comportant du fluor et du chlore, des hydrocarbures aliphatiques et/ou cycloaliphatiques.

20. Procédé selon la revendication 1, **caractérisé en ce qu'**on effectue la réaction à un indice dans la plage de 100 à 400.

21. Procédé selon la revendication 1, **caractérisé en ce que** la réaction est effectuée sur une unité à double bande.

22. Mousses rigides de polyuréthanne, produites selon l'une quelconque des revendications 1 à 21.

23. Polyester-alcools ayant une fonctionnalité de 1,5 à 6 et un indice de groupes hydroxy dans la plage comprise entre 200 et 800 mg de KOH/g, préparés par mise en réaction de 10 à 50 % en moles d'un acide carboxylique aliphatique au moins bifonctionnel, de 3 à 20 % en moles d'un acide gras ou de 1 à 8 % en moles d'une huile végétale et de 40 à 80 % en moles d'un alcool aliphatique au moins bifonctionnel, les pourcentages en moles se complétant à 100 % en moles.
